Europäisches Patentamt

European Patent Office

Office européen des brevets

(19)

(11) **EP 0 684 465 B1**

(12) **EUROPÄISCHE PATENTSCHRIFT**

(45) Veröffentlichungstag und Bekanntmachung des Hinweises auf die Patenterteilung:
**01.03.2000 Patentblatt 2000/09**

(51) Int Cl.$^7$: **G01M 7/02**

(21) Anmeldenummer: **95106972.3**

(22) Anmeldetag: **09.05.1995**

(54) **Verfahren zur Raffung gemessener, mehraxialer Belastungszeitfunktionen, insbesondere für Schwingfestigkeitsuntersuchungen von Bauteilen**

Procedure for compressing measured multidirectional load-time functions, in particular for evaluating the vibration resistance of structures

Procédé de compression des fonctions charge-temps multiaxiaux mesurées, en particulier pour l'examen de la résistance contre les vibrations de structures

(84) Benannte Vertragsstaaten:
**DE FR GB IT NL SE**

(30) Priorität: **27.05.1994 DE 4418599**

(43) Veröffentlichungstag der Anmeldung:
**29.11.1995 Patentblatt 1995/48**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **Schütz, Dieter, Dr. Ing.**
**D-64354 Reinheim (DE)**
• **Klätschke, Hartmut**
**D-64380 Rossdorf (DE)**

(56) Entgegenhaltungen:
**US-A- 4 493 213**

## Beschreibung

Die Erfindung betrifft ein Verfahren zur Raffung von mehraxialen Belastungszeitfunktionen, insbesondere Schwingfestigkeitsuntersuchungen von Bauteilen.

Zur Untersuchung des Schwingfestigkeitsverhaltens von Bauteilen oder Baugruppen werden zunehmend mehraxiale Schwingfestigkeitsversuche durchgeführt, d.h. in das zu untersuchende Bauteil werden gleichzeitig mehrere Belastungszeitfunktionen eingeleitet. Diese werden in der Regel durch Messungen im Betriebseinsatz des betreffenden oder eines ähnlichen Bauteiles gewonnen. Anschließend werden die aufgenommenen Belastungs-zeitfunktionen zwecks Untersuchung des Bauteiles in Echtzeit an einer Prüfmaschine (wie gemessen) nachgefahren. Dadurch sind die Versuche langwierig, zeitaufwendig und teuer, der Energiebedarf zum Antrieb entsprechender Prüfmaschinen (Hydraulikzylinder) ist hoch. Zeitliche Verkürzungen der Schwingfestigkeitsprüfungen werden meistens durch Weglassen von unwesentlichen Teilabschnitten der Messung erreicht. Der dadurch erzielte Raffungseffekt ist aber relativ gering. Daher ist die Leistung der entsprechenden Prüfmaschinen selten voll ausgenutzt, da die Maschinen für die Extremwerte der Belastungen und die dafür erforderlichen Zylindergeschwindigkeiten und Beschleunigungen ausgelegt werden müssen. Diese Extremwerte treten jedoch bezogen auf die relativ lange Zeitdauer des Versuches sehr selten auf. Damit ist die zur Verfügung stehende Kapazität der Prüfmaschine in der überwiegenden Zeit der Prüfung nur zu einem Bruchteil ausgenutzt.

Aufgabe der vorliegenden Erfindung ist es, für die Prüfung von Bauteilen die gemessenen Belastungs-Zeitfunktionen unter Einhaltung der Korrelationen zwischen den gleichzeitig wirkenden Belastungen so zu raffen, daß die Prüfzeit des Bauteiles wesentlich verkürzt wird.

Diese Aufgabe wird durch das im Anspruch 1 angegebene Verfahren gelöst.

Bei dem angegebenen Verfahren wird vorausgesetzt, daß die zwischen den Referenzmeßstellen im Prüfstand und den schwingbruchkritischen Stellen des zu untersuchenden Bauteiles wirkenden dynamischen Massen- oder Dämpferkräfte im Frequenzbereich der eingeleiteten Belastungszeitfunktionen vernachlässigbar klein sind. Nur unter Einhaltung dieser Randbedingung kann davon ausgegangen werden, daß das angegebene Verfahren nicht zur Verfälschung der resultierenden Beanspruchungen am Bauteil führt.

Als Basis für mehraxiale Schwingfestigkeitsversuche dienen meist gemessene Belastungs-zeitfunktionen.

Im ersten Schritt des Verfahrens werden aus den gemessenen Belastungszeitfunktionen mit einer der Methoden, die nach dem Stand der Technik hierfür üblicherweise angewendet werden, Beanspruchungszeitfunktionen berechnet, um eine Aussage über die im Bauteil an hoch beanspruchten Stellen vorliegende Spannungen bzw. Dehnungen zu ermöglichen. Ist eine derartige Berechnung der Beanspruchungszeitfunktionen nicht möglich, da z.B. die schwingbruchkritischen Stellen am Bauteil nicht bekannt sind, werden als "default-Lösung" fiktive, resultierende Beanspruchungszeitfunktionen (RES) aus den gemessenen Belastungszeitfunktionen $B_1(t)$, $B_2(t)$, ...) in verschiedenen Wirkungsrichtungen (Projektionen) gemäß nachfolgend als Beispiel wiedergegebenen Gleichungen errechnet:

$$RES_1(t_i) = C_{I,I}\, B_I(t_i) + C_{1,2}\, B_2(t_i) + ... + C_{1,n}.Bn(t_i)$$

$$RES2(t_i) = C2,2.B_I(t_i) + C_{2,2}\, B_2(t_i) + ... + C_{2,n}.Bn(t_i)$$

$$RESm(t_i) = Cm,1.B_I(t_i) + C_{m,2}.B_2(t_i) + ... + C_{m,n}.B_n(t_i)$$

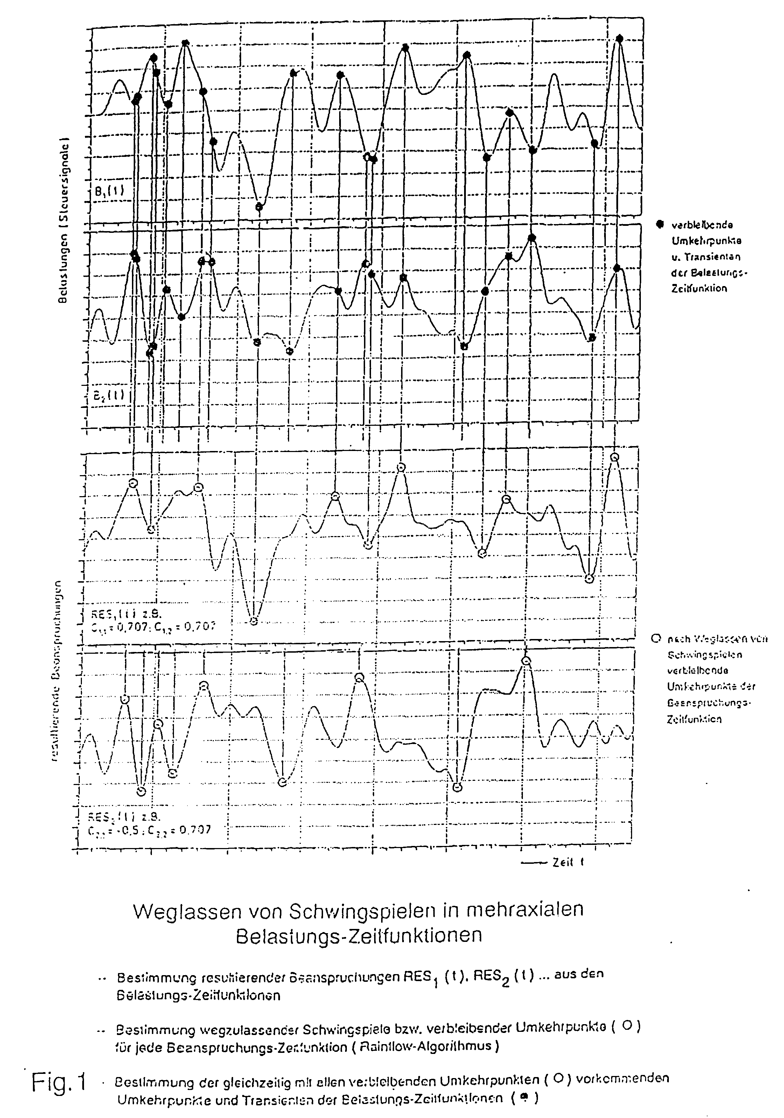

Sind die Beanspruchungszeitfunktionen auf diese Weise bestimmt, so ist der komplizierte, mehraxiale Belastungszustand in jeder der verschiedenen betrachteten Wirkungsrichtungen auf einen einachsigen fiktiven Beanspruchungsverlauf reduziert. Für jede der so ermittelten Beanspruchungszeitfunktionen für die verschiedenen betrachteten Wirkungsrichtungen werden die Umkehrpunkte der Schwingspiele ermittelt, die nicht nennenswert zur Schädigung der Bauteile an den betreffenden Stellen beitragen und deshalb weggelassen werden können (Omission). Die Kriterien nach denen diese Entscheidung getroffen wird, orientieren sich im wesentlichen am jeweils aktuellen Erkenntnis- oder Erfahrungsstand und können, wie das schon bei einaxialen Belastungszeitfunktionen üblich war, z.B. Schwingspiele betreffen, deren Amplituden kleiner sind als die halbe örtliche Dauerfestigkeit des Bauteils, oder die eine bestimmte Größe relativ zur Maximalamplitude unterschreiten. Die Problematik des Weglassens der nicht zur Schädigung beitragenden Schwingspiele kann bei dieser Vorgehensweise einachsig behandelt werden. Zur praktischen Ermittlung dieser Schwingspiele bzw. der Umkehrpunkte wird ein Rainflow-Algorithmus angewandt. Das praktische Vorgehen kann z.B. sein, die Umkehrpunkte, die nicht weggelassen werden dürfen, zu markieren (Fig. 1).

Der nächste Schritt des Verfahrens bezieht sich auf die Übertragung der in den Beanspruchungszeitfunktionen ermittelten, nicht wegzulassenden Umkehrpunkte auf die gemessenen Belastungszeitfunktionen. Die Zeitpunkte, an denen in den Beanspruchungszeitfunktionen nicht wegzulassende Umkehrpunkte vorkommen, müssen nunmehr auf die Belastungszeitfunktionen übertragen werden; die Momentanwerte der verschiedenen Belastungszeitfunktionen zu diesen Zeitpunkten, die sogenannten Stützpunkte müssen erhalten bleiben. Alle übrigen Umkehrpunkte und Transienten in den Belastungszeitfunktionen bestimmen nur die Übergänge zwischen den relevanten Umkehrpunkten der Beanspruchungszeitfunktionen und können daher ohne Auswirkung auf die Schädigung des Bauteiles zugunsten der angestrebten Zeitraffung verändert werden. Die mit den relevanten Umkehrpunkten und Transienten versehenen Belastungszeitfunktionen werden nunmehr auf diese Umkehrpunkte und Transienten, die Stützpunkte, reduziert . Das Ergebnis sind Folgen von Umkehrpunkten und Transienten, in denen die ursprünglichen Zeitinformationen der gemessenen Belastungszeitfunktionen nur noch insofern enthalten sind, als gleichzeitige Werte der verschiedenen Belastungen einander zeitlich zugeordnet bleiben, d.h. die Phasenkorrelation bleibt erhalten.

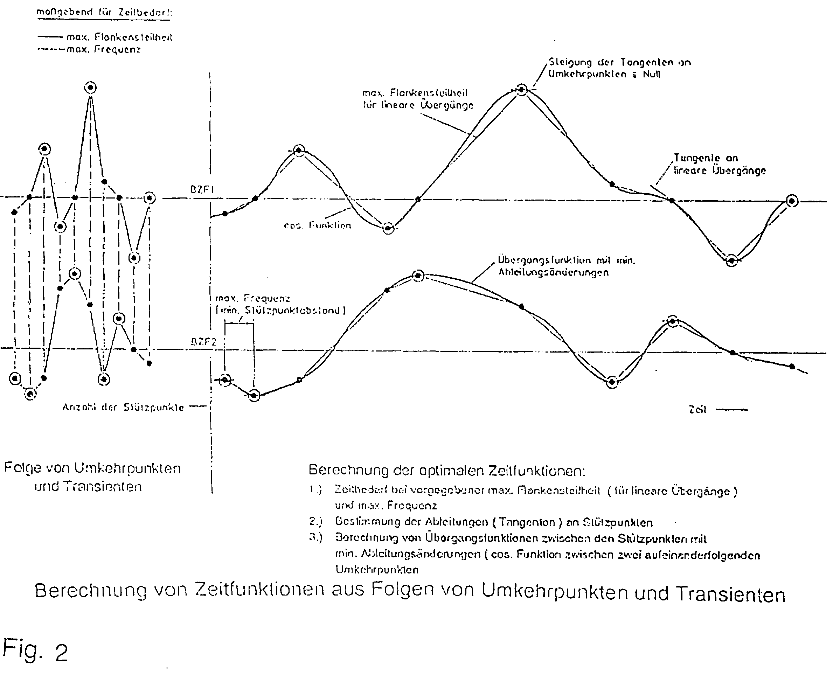

Diese Schritte des erfindungsgemäßen Verfahrens sind in Fig. 1 und Fig. 2, links, dargestellt. Die durch Messungen am Bauteil aufgenommenen Belastungszeitfunktionen sind als $B_1(t_i)$ und $B_2(t_i)$-Kurven dargestellt. Aus diesen gemessenen Belastungszeitfunktionen werden für verschiedene Richtungen, jedoch jeweils einachsig Beanspruchungszeitfunktionen $RES_1(t_i)$ und $RES_2(t_i)$ berechnet. Auf diesen Beanspruchungszeitfunktionen werden die Umkehrpunkte markiert, die nach bereits oben beschriebenen Kriterien nicht weggelassen werden können. Diese Umkehrpunkte der Beanspruchungszeitfunktionen werden nunmehr in die gemessenen Belastungszeitfunktionen $B_1(t_i)$ und $B_2(t_i)$ übertragen und dort als nicht wegzulassende verbleibende Momentanwerte, die Stützpunkte, markiert. Die mit den markierten Punkten versehenen Belastungszeitfunktionen können nunmehr einer zeitlichen Raffung unterzogen werden, es ist also das Ziel, unter Beachtung der maximalen Werte der Geschwindigkeit, der Beschleunigung und der Frequenz der Prüfmaschine die Folge der markierten Belastungen, d.h. der Stützpunkte in möglichst kurzer Zeit, nachzufahren. Handelt es sich um eine Prüfmaschine mit servohydraulischen Zylindem, so werden die Leistungsdaten der Zylinder beachtet.

Der nächste Schritt des Verfahrens, die Berechnung optimaler Belastungszeitfunktionen, ist in Fig. 2 dargestellt. Die Signale zur Ansteuerung von Prüfmaschinen (in der Regel sind es Maschinen bei denen servohydraulische Zylinder die erforderliche Belastung einleiten) dürfen bestimmte, durch die Leistungsdaten der Zylinder gegebene Grenzwerte ,nicht überschreiten. Dies sind neben der Höhe der Belastung ihre Änderungsgeschwindigkeit (Flankensteilheit, erste Ableitung), die Geschwindigkeitsänderung (Beschleunigung, zweite Ableitung) und die maximale Grenzfrequenz. Auf diese Art und Weise werden die gemessenen und auf ihre schädigungsrelevanten Teile reduzierten Belastungszeitfunktionen den Möglichkeiten der Prüfmaschine optimal angepaßt. Auch bei diesen Schritten muß die Phasenkorrelation zwischen den eingeleiteten Belastungen an den Stützpunkten stets eingehalten werden. Nach der in der Fig. 2 dargestellten Berechnungsmethode wird wie folgt vorgegangen:

Berechnung des maximalen Zeitbedarfs zwischen zwei aufeinander folgenden Stützpunkten bei vorgegebenen maximalen Flankensteilheiten (die mögliche Belastungsänderungsgeschwindigkeit der Prüfzylinder) in allen Belastungszeitfunktionen für zunächst lineare Übergänge. Maßgebend ist der größte Zeitbedarf in einer der beteiligten Belastungszeitfunktionen zwischen zwei Stützpunkten. Dieser Zeitbedarf wird in der überwiegenden Zahl der Übergänge geringer sein als bei den gemessenen Zeitfunktionen, wodurch der erwünschte Zeitraffungseffekt erzielt wird. Ist der errechnete Zeitbedarf geringer als derjenige, der der gleichzeitig zu beachtenden maximalen Grenzfrequenz entspricht, gilt der Zeitbedarf für die maximale Grenzfrequenz. Mit den somit bekannten Zeitabständen zwischen den Stützpunkten und Transienten werden die Zeitfunktionen mit zunächst linearen Übergängen berechnet. Der nächste Schritt ist die Bestimmung der Tangenten (Steigungen, Ableitungen) an den Stützpunkten als Mittelwerte der linearen Steigungen vor und nach den Stützpunkten. Die Steigung der Tangenten an Umkehrpunkten wird immer zu Null gesetzt. Die Übergangsfunktionen mit minimalen Steigungsänderungen (minimale zweite Ableitungen, die das Maß der Beschleunigungen bzw. der Geschwindigkeitsänderung der Prüfzylinder sind) werden zwischen den Stützpunkten bei gegebenen Steigungen an den Stützpunkten berechnet. Direkte Übergänge zwischen zwei aufeinander folgenden Umkehrpunkten werden durch Cosinus-Funktionen verbunden. Die maximalen Flankensteilheiten (die Belastungsänderungsgeschwindigkeiten der Zylinder) dieser endgültigen Zeitfunktion sind etwas größer als die der ursprünglich gewählten linearen Flankensteilheiten, was bei der Wahl der maximalen linearen Flankensteilheiten zu berücksichtigen ist. Die nach dem hier beschriebenen Verfahren ermittelte zeitgeraffte Belastungszeitfunktion ist in Fig. 2, rechts dargestellt, links ist die nach Teil 1, siehe Fig. 1, vorliegende, nicht nachfahrbare Folge von Umkehrpunkten und Transienten, aus denen die optimierten Zeitfunktionen berechnet werden, dargestellt.

Das erfindungsgemäße Verfahren eignet sich zur Prüfung von Bauteilen, z.B. aus dem Kraftfahrzeug-, Maschinen- und Flugzeugbau) unter mehraxialen Belastungen. Durch die Möglichkeit der Zeitraffung nach dem erfindungsgemäßen Verfahren wurde am Beispiel von Bauteilen einer Pkw-Radaufhängung und einem gemessenen Prüfstreckenabschnitt, der bereits durch den Typ der Fahrstrecke eine hohe Belastungsdichte aufwies, beim erfahrungsgemäß vertretbaren Weglassen von Schwingspielen, die 10% der Maximalwerte betrugen, eine vierfache, bei 15% eine achtfache Verkürzung erreicht.

**Patentansprüche**

1. Verfahren zur Raffung gemessener, mehraxialer Belastungszeitfunktionen für insbesondere Schwingfestigkeitsuntersuchungen von Bauteilen an Prüfmaschinen mit insbesondere servohydraulischen Zylindern, mit folgenden Schritten:

- Berechnung von resultierenden Beanspruchungszeitfunktionen einachsiger Bauteilbeanspruchungen aus gemessenen, mehraxialen Belastungszeitfunktionen;
- Bestimmung jener Umkehrpunkte in den Zeitfunktionen der einachsigen Bauteilbeanspruchungen, die zu nicht schädigenden Schwingspielen gehören und Markieren aller übrigen (schädigungsrelevanten) Umkehrpunkte in den Zeitfunktionen der Bauteilbeanspruchungen;
- Markieren aller Umkehrpunkte und Transienten der Belastungszeitfunktionen, die gleichzeitig mit den in allen berechneten Zeitfunktionen der Bauteilbeanspruchungen markierten (schädigungsrelevanten) Umkehrpunkten vorkommen;
- Reduzierung der Belastungszeitfunktionen auf ausschließlich diese Umkehrpunkte und Transienten, die die Stützpunkte bilden;
- Berechnung der gerafften Belastungszeitfunktionen durch Berechnung von Übergangsfunktionen zwischen den Stützpunkten und unter Berücksichtigung der Leistungskennwerte der Prüfmaschine, d.h. der Grenzwerte der Geschwindigkeit, der Beschleunigung und der Frequenz.

**2.** Verfahren nach Anspruch 1, **dadurch gekennzeichnet**, daß die im ersten Schritt des Verfahrens berechneten Beanspruchungszeitfunktionen als fiktive resultierende Beanspruchungszeitfunktionen einachsiger Bauteilbeanspruchungen aus allen möglichen Lastkombinationen der gemessenen, mehraxialen Belastungszeitfunktionen berechnet werden.

**3.** Verfahren nach Anspruch 1 oder 2, **dadurch gekennzeichnet**, daß die schädigungsrelevanten Umkehrpunkte in den Zeitfunktionen der einachsigen Beanspruchungen durch Anwendung eines Rainflow-Algorithmus festgestellt, die gleichzeitigen Momentanwerte der Belastungszeitfunktionen (Umkehrpunkte und/oder Transienten) bestimmt und die Belastungszeitfunktionen auf diese Momentanwerte (Stützpunkte) reduziert werden.

**Revendications**

**1.** Procédé pour resserrer des fonctions charges-temps mesurées, multiaxiales pour examiner en particulier la résistance à la fatigue de pièces sur des machines d'essai avec en particulier des vérins servo-hydrauliques, comportant les séquences suivantes :

- le calcul des fonctions charges-temps résultantes de sollicitations monoaxiales de la pièce à partir de fonctions charges-temps mesurées, multiaxiales ;
- la détermination des points de rebroussement dans les fonctions du temps des sollicitations monoaxiales qui font partie de jeux de fatigues ne causant pas de dommages , et le marquage de tous les points de rebroussement restants (qui comptent pour les endommagements) dans les fonctions dans le temps des sollicitations de la pièce ;
- le marquage de tous les points de rebroussement et transitions des fonctions charges-temps, qui se produisent en même temps que les points de rebroussement (qui comptent pour les endommagements) marqués dans toutes les fonctions dans le temps calculées des sollicitations de la pièce ;
- la réduction des fonctions charges-temps exclusivement à ces points de rebroussement et ces transitions , qui forment les points d'appui ;
- le calcul des fonctions charges-temps resserrées par le calcul de fonctions de passage entre les points d'appui et en prenant en considération les valeurs caractéristiques de la puissance de la machine d'essai, c'est-à-dire les valeurs limites de la vitesse, de l'accélération et de la fréquence.

**2.** Procédé selon la revendication 1, caractérisé en ce que les fonctions sollicitations-temps calculées lors de la première séquence du procédé sont calculées comme des fonctions sollicitations-temps fictives résultantes de sollicitations monoaxiales de la pièce à partir de toutes les combinaisons possibles de charges des fonctions charges-temps mesurées, multiaxiales.

**3.** Procédé selon la revendication 1 ou selon la revendication 2, caractérisé en ce que les points de rebroussement qui comptent pour les endommagements dans les fonctions dans le temps des sollicitations monoaxiales, sont réduits en utilisant un algorithme Rainflow, qui détermine des valeurs momentanées simultanées des fonctions charges-temps (points de rebroussement et ou de transitions) et les fonctions charges-temps pour ces valeurs momentanées (points d'appui).

**Claims**

1.  Procedure for compressing measured multidirectional load-time functions, in particular for evaluating the fatigue resistance of structures on testing machines which in particular have servohydraulic cylinders, in the following stages;

    •   calculation of resultant stress-time functions of one-directional structural stresses from measured multidirectional load-time functions;

    •   determination of those turning points in the time functions of one-directional structural stresses, which are not amongst damaging vibration cycles, and marking of all remaining (damage-relevant) turning points in the time functions of the structural stresses;

    •   marking of all turning points and transients of the load-time functions which occur simultaneously with the (damage-relevant) turning points which are marked in all of the calculated time functions of the structural stresses;

    •   reduction of the load-time functions exclusively to those turning points and transients which form the supporting points;

    •   calculation of the compressed load-time functions by calculating the transition functions between the supporting points and while taking into consideration the performance characteristics of the testing machine i.e. the limiting values of velocity, acceleration and frequency.

2.  Procedure according to claim 1, **characterised in that** the stress-time functions calculated in the first stage of the procedure are calculated as hypothetical, resultant stress-time functions of one-directional structural stresses from all possible load combinations of the measured, multidirectional load-time functions.

3.  Procedure according to Claim 1 or 2, **characterised in that** the damage-relevant turning points in the time functions of the one-directional stresses are established by application of a rainflow algorithm, the simultaneous momentary values of the load-time functions (turning points and/or transients) are determined and the load-time functions are reduced to these.

Weglassen von Schwingspielen in mehraxialen
Belastungs-Zeitfunktionen

-- Bestimmung resultierender Beanspruchungen RES$_1$ ( t ), RES$_2$ ( t ) ... aus den Belastungs-Zeitfunktionen

-- Bestimmung wegzulassender Schwingspiele bzw. verbleibender Umkehrpunkte ( O ) für jede Beanspruchungs-Zeitfunktion ( Rainflow-Algorithmus )

Fig. 1 · Bestimmung der gleichzeitig mit allen verbleibenden Umkehrpunkten ( O ) vorkommenden Umkehrpunkte und Transienten der Belastungs-Zeitfunktionen ( ● )

Berechnung von Zeitfunktionen aus Folgen von Umkehrpunkten und Transienten

Fig. 2